# EUROPEAN PATENT SPECIFICATION

(11) **EP 2 204 996 B1**
(45) Date of publication and mention of the grant of the patent: **22.05.2013**
(21) Application number: 09179042.8
(22) Date of filing: 14.12.2009
(51) Int. Cl.: H04N 7/24, H04N 21/4385

(54) **Processing packet streams**
Verarbeitung von Paketströmen
Traitement des flux de paquets

(30) Priority: 31.12.2008 GB 0823704
(43) Date of publication of application: 07.07.2010
(73) Proprietor: STMicroelectronics (Research & Development) Limited, Marlow, Buckinghamshire SL7 1YL (GB)
(72) Inventor: Bolton, Martin, Blagdon, Bristol BS40 7SA (GB); Pearson, Paul, Bristol, BS6 6EQ (GB); Emslie, Diarmuid, Clifton, Bristol BS8 3JT (GB)
(74) Representative: Style, Kelda Camilla Karen

(56) References cited:
- EP-A1- 0 893 921
- EP-A1- 1 365 560
- EP-A2- 1 286 549
- EP-A2- 1 657 912
- WO-A2-01/37548
- US-A1- 2004 228 414
- US-A1- 2004 230 813
- US-B1- 7 334 132
- ANDERSON R E ET AL: "Design of an MPEG-2 transport demultiplexor core", IBM JOURNAL OF RESEARCH AND DEVELOPMENT, INTERNATIONAL BUSINESS MACHINES CORPORATION, NEW YORK, NY, US, 1 July 1999 (1999-07-01), pages 521-532, XP002278633, ISSN: 0018-8646
- HANNA C ET AL: "DEMULTIPLEXER IC FOR MPEG2 TRANSPORT STREAMS", INTERNATIONAL CONFERENCE ON CONSUMER ELECTRONICS - DIGEST OF TECHNICAL PAPERS. ROSEMONT, JUNE 7 - 9 1995; [INTERNATIONAL CONFERENCE ON CONSUMER ELECTRONICS - DIGEST OF TECHNICAL PAPERS], NEW YORK, IEEE, US, vol. CONF. 14, 7 June 1995 (1995-06-07), page 252/253, XP000547809, ISBN: 978-0-7803-2141-0
- HURLEY T R: "EVOLUTION OF THE DIGITAL SET TOP BOX", INTERNATIONAL BROADCASTING CONVENTION, LONDON, GB, no. 428, 1 January 1996 (1996-01-01), pages 277-282, XP000905436, DOI: 10.1049/CP:19960820

## Description

### Field of the invention

The present invention relates to the processing of packet streams, including security processing.

### Background of the Invention

In the transmission of data such as audio or video data, it is known to arrange the data into packet streams.

This means that firstly, the data is divided into discrete packets of a predetermined format, each packet comprising a header and a payload. The header may contain various types of control data including at least a packet identifier. The payload then contains the actual information content, i.e. the information such as the audio or video data that the end-user wishes to consume, sometimes also referred to as "user data". The payload may be encoded for compression purposes and encrypted for security, such that the user data is typically not transmitted in its "raw" form. The packet may also comprise redundant information in the form of error correction codes for use in error correction at the receive side.

Secondly, the fact that the packets are part of a stream means that they have a certain sequential order and real-time requirement relating to their information content. Although a stream may be stored for later consumption, and/or its order or timing requirements need not necessarily be maintained during processing prior to consumption, when the stream is ultimately output to the user for consumption then the order and real-time requirements must be respected (at least on a practical level to a degree that is unnoticeable or tolerable to the user).

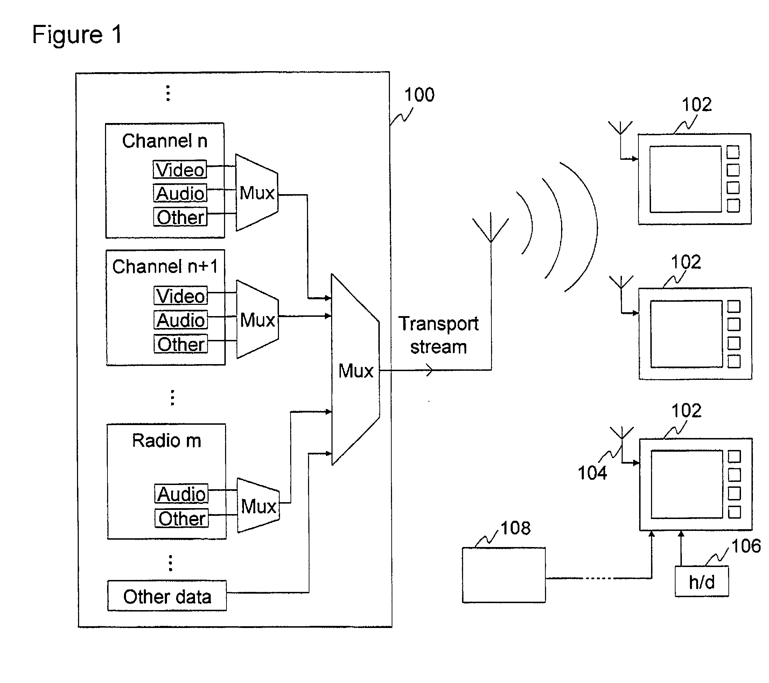

One technique for transmitting streams is to multiplex a plurality of streams into a combined stream known as a "transport stream". An example application of this technique is shown schematically in Figure 1, which shows a digital television transmitter 100 broadcasting digital media to a plurality of receiving user terminals 102. The transmitter 100 could for example be a satellite transmitter for transmitting wireless, digital transport stream signals via a network of one or more satellites; or a terrestrial television transmitter for transmitting wireless, digital transport stream signals via a network of one or more land-based repeater stations. A user terminal 102 could for example be a television set with and integrated digital receiver, a set-top box connected to a television set, a digital radio, or a portable terminal equipped with an appropriate receiver.

The transmitter 100 is to broadcast the content of a plurality of different concurrent television channels. In the terminology of transport streaming, a group of related streams intended for simultaneous consumption by the same user are together referred to as a program. For example, the output content of a television channel n may comprise a program in the form of a video stream, one or more audio streams (e.g. two in the case of stereo), and another data stream comprising other related data such as text summarising the program or data for use in an interactive service. In the terminology of transport streaming, each of these streams individually may be referred to as an "elementary stream", which in packetised form comprises a plurality of "elementary packets". That is, an elementary stream is a non-multiplexed stream of a single media type and single program.

The transmitter 100 may also broadcast the content of a radio station (i.e. pure audio content without video). For example, the output content of a radio station m may comprises a radio program in the form of one or more audio streams and another data stream providing program information.

The transmitter 100 may also transmit a separate data stream of other non-audio/video data not specifically related to any one particular channel or station, such as text providing program listings, or general interactive content.

At the transmitter 100, the audio, video and/or other data streams of each program are multiplexed together into a respective transport stream. Those transport streams are then multiplexed together into a combined transport stream for transmission. There is not necessarily a one-to-one relation between the elementary packets and the packets of the transport streams; i.e. the elementary streams may be repackaged, typically from longer, variable length elementary packets into shorter, fixed length transport packets. The multiplexing is then typically by time-division multiplexing such that transport packets are interleaved with one another in time.

To aid in selecting and handling the streams of the required program at the receivers 102, some control information is included in the transport stream by the transmitter 100. The transport packets of a program each comprise synchronisation information, typically in the form of a synchronisation byte. For example, the synchronisation bytes of a television program inform the receiver 102 how the audio streams are aligned in time with one another and with the corresponding video stream of that same program, allowing the audio and corresponding video to be synchronised at the receiver 102. Each transport packet also includes a Packet ID (PID) to identify the elementary stream from which it was derived. The transport stream then includes a Program Map Table (PMT) which maps together the PIDs of corresponding audio, video and data streams to their respective programs, i.e. identifies which streams are part of which programs.

Some receivers 102 may be arranged to receive multiple transport streams. For example, in addition to being able to receive a transport stream broadcast from the transmitter 100, a receiver 102 may also be able to retrieve stored transport streams from a hard drive 106, or transport streams via a wired connection to another source 108 such as a cable television provider or the Internet.

In addition to the above, it is also necessary to perform security operations as part of the transmit and receive processing of the transport streams. For example, this may involve encrypting the streams prior to transmission and decrypting them again at the receiver, so as to prevent unauthorised users exploiting the transmission.

Security operations can be implemented in dedicated hardware at the receiver 102. However, this has the disadvantage of being inflexible, since the security cannot be altered or updated without an expensive and time-consuming redesign and remanufacture of the receiver. Alternatively, the security operations can be implemented in software executed on the receiver's processor (typically in the form of firmware). However, although this software option allows more flexibility, it also has its own disadvantages over the hardware option. Firstly, the software security processing incurs additional machine cycles and thus may interfere with other packet processing operations being performed by the processor such as de-multiplexing, error correction, etc. This may be particularly problematic in the case of streaming, where the increased processing cost incurred may slow the processor down and unduly interfere with the real-time requirements of the streams. Secondly, if security is implemented in software then the security algorithms may be vulnerable to hacking, and so there is an increased risk of security being compromised.

It would be advantageous to allow security processing to be performed in software on a processor, but at the same time reduce the perturbance this has on other packet processing operations due to the increased processing cost incurred by the security processing. It would also be advantageous to reduce the security risk incurred by performing security processing in software.

US 2004/0228414 describes an architecture for processing transport streams with a host CPU, a memory and a transport demultiplexer comprising a plurality of processing units. The transport demultiplexer separates individual transport streams on which the host CPU carries out processing.

### Summary

According to a first embodiment there is provided a system for processing packet streams, the system comprising: a system data-bus for transferring packets of data; a system memory connected to the data-bus for storing packets; a first programmable processor connected to the data-bus, arranged to receive an input stream comprising secure packets; a second programmable processor connected to the data-bus; the system being characterised by the second processor programmed to perform security processing by applying one or more security algorithms to the secure packets to generate security-processed packets; and first packet queuing circuitry connected between the first processor and the second processor, separate from said data-bus and memory, operable to queue secure packets for transfer from the first processor to the second processor; and second packet queuing circuitry connected between the first processor and the second processor, separate from said data-bus and memory, operable to queue security-processed packets for transfer from the second processor to the first processor; wherein the first processor is programmed to transfer the secure packets to the second processor via the first queuing circuitry for said security processing; the second processor is programmed to return the security-processed packets to the first processor via said second queuing circuitry; and the first processor is programmed to further process the security-processed packets, other than by applying a security algorithm, to generate output data for output to a user output apparatus.

The first queuing circuitry may comprise a first-in-first-out buffer connected in a first direction to queue packets for transfer from the first processor to the second processor, and the second queuing circuitry may comprise a first-in-first-out buffer connected in a second direction to queue packets for transfer from the second processor to the first processor.

Each packet may comprise a header and a payload, and said security processing may comprise decrypting the payloads of the packets.

The further processing may comprise operating on decrypted payloads of the packets

Front-end circuitry may be connected to the data-bus, which may be arranged to receive the input stream and write the secure packets of that stream to the system memory via said data-bus; wherein the first processor may be programmed to receive the input stream by retrieving the secure packets from the system memory via said data-bus.

The input stream may be an input transport stream which may comprise secure packets of a plurality of multiplexed streams, each packet may comprise a header and a payload, and the front-end circuitry may comprise filtering circuitry arranged to read the headers to select only the secure packets of one or more desired multiplexed streams to write to the system memory.

The input stream may be an input transport stream which may comprise secure packets of a plurality of multiplexed streams, each packet may comprise a header and a payload, and the first processor may be programmed to read the headers to select only the secure packets of one or more desired multiplexed streams for said security processing and further processing.

Each packet may comprise a header and a payload, the payload of one or more of the packets may comprise a plurality of sub-packets, and said operation of the first processor on the decrypted payloads may comprise filtering out unwanted sub-packets.

The operation of the first processor on one or more of the decrypted payloads may comprise using the payload to index the packet.

The first processor may be programmed to discard the decrypted payload of the indexed packet after indexing.

The input stream may be an input transport stream which may comprise secure packets of a plurality of multiplexed streams; the first processor may be programmed to generate the output data in the form of output packets for output to the user output apparatus, and to write the output packets to the system memory via said data-bus; and the system may comprise transport stream generation circuitry arranged to retrieve the output packets from the system memory via said data-bus, arrange them into an output transport stream comprising secure packets of a plurality of multiplexed streams, and output the output transport stream to the user apparatus as an output stream.

Each packet may comprise a header and a payload, and the first processor may be programmed to assess one or more headers of the secure packets to determine a sequence of operations to be performed before subsequently transferring the secure packets to the second processor for security processing.

Each packet may comprise a header and a payload, and both the headers and the payloads of a plurality of said packets may be encrypted together into an encrypted block; the front-end circuitry may be arranged to receive and write said block to the system memory; and he second processor may be programmed retrieve said block and perform a perform a block-based decryption to extract the packets of said block, then write the extracted packets back to the system memory prior to said retrieval by the first processor.

The second processor may be arranged to return status information regarding the security-processed packets to the first processor via the second queuing circuitry.

Some address ranges of the second processor may be blocked from external access.

The first processor may be programmed so as to control each of the following operations to be performed substantially concurrently: (i) retrieval of a secure packet from the system memory via said data-bus, the retrieval may involve a delay whilst the read completes in which the first processor may be unoccupied in the retrieval and can begin another operation; (ii) security processing of a previously retrieved packet by the second processor, the security processing may involve a delay whilst the first processor awaits the return of a security-processed packet from the second processor and can begin another operation; (iii) processing a previously security-processed packet by the first processor to generate a corresponding output data; and (iv) writing a previously generated output data to the system memory via said data-bus, the writing may involve a delay whilst the write completes in which the first processor is unoccupied in the writing and can begin another operation.

The input stream may comprise at least one of an audio and video stream, and said further processing may comprise obtaining elementary packets from the security-processed packets for decoding of audio or video content by the user output apparatus.

The audio or video input stream may comprise packets encoded according to one of: a satellite television format, a terrestrial television format, a cable television format, and internet protocol.

The audio or video input stream may comprise packets encoded according to one of the DVB or DirecTV standard sets.

According to a second embodiment, there is provided a method of processing packet streams, the method comprising: at a first programmable processor connected to a second programmable processor and system memory via a data-bus, receiving an input stream comprising secure packets; the method being characterised by: using first packet queuing circuitry connected between the first processor and the second processor, separate from said data-bus and memory, to queue the secure packets for transfer from the first processor to the second processor; at the second processor, executing code to perform security processing by applying one or more security algorithms to the secure packets received via said first queuing circuitry to generate security-processed packets; using second packet queuing circuitry connected between the first processor and the second processor, separate from said data-bus and memory, to queue the security-processed packets for transfer from the second processor to the first processor; and executing code on the first processor to further process the security-processed packets received via the second queuing circuitry, other than by applying a security algorithm, to generate output data for output to a user output apparatus.

### Brief Description of the Drawings

For a better understanding of the present invention and to show how it may be carried into effect, reference will now be made by way of example to the accompanying drawings in which:
Figure 1 is a schematic block diagram of a media communication network,
Figure 2 is a schematic block diagram of a receiver system for processing streams received over the communication network,
Figure 3 is a schematic block diagram of a transport stream subsystem for use in a receiver system,
Figure 4 is a schematic block diagram of a transport processor for use in a transport stream subsystem,
Figure 5 is a schematic block diagram of a security co-processor for use in a transport stream subsystem, and
Figure 6 is a flow chart of a method of operating a transport processor in a transport subsystem.

### Detailed Description of Preferred Embodiments

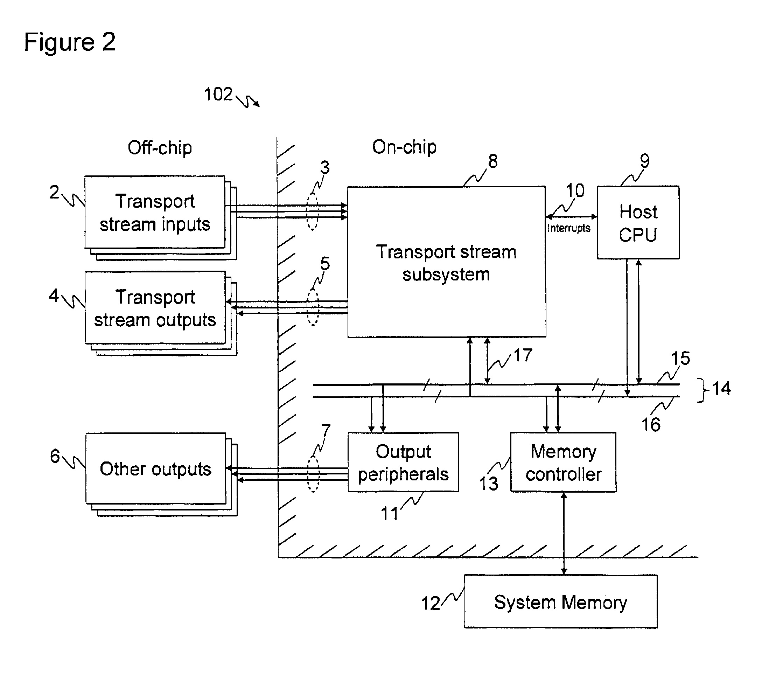

Figure 2 shows a schematic block diagram of a receiver system such as user terminal 102 for receiving and processing transport streams. The system has a chip comprising a transport stream subsystem 8, a host CPU 9, a system memory controller 13 , one or more output peripherals 11, and an on-chip bus network 14 comprising a data bus 15 and a configuration bus 16.The transport stream subsystem 8, host CPU 9, system memory controller 13, and output peripherals 11 are all coupled to one another by a connection to the data-bus 15, including by a transport subsystem bus interface 17 connecting the transport stream subsystem 8 to the data bus 15. Each of the transport stream subsystem 8, memory controller 13 and output peripherals 11 is also coupled to the host CPU 9 via the configuration bus 16. Further, the transport stream subsystem 8 is connected to the host CPU 9 via one or more interrupt lines 10. The memory controller 13 is connected to an off-chip system memory 12 such as an SRAM or other RAM (although potentially an on-chip system memory 12 could be used, connected directly to the data-bus 15).

The chip comprises further external, off-chip connections. These may include transport stream input connections 3, transport stream output connections 5, and other output connections 7. The on-chip transport stream subsystem 8 is connected to one or more transport stream input devices via the transport stream input connections 3, and is thus arranged to receive one or more input transport streams 2 originating from off-chip. The input device could for example be a satellite, terrestrial or cable tuner and demodulator device; a hard drive storing one or more transport streams; or a modem for receiving streams from the Internet. The on-chip transport stream subsystem 8 may also be connected to one or more transport stream output devices via the transport stream output connections 5, and thus arranged to supply one or more output transport streams 4 off-chip. For example, the transport stream output device could be an IEEE 1394 link layer device for sending the transport stream onto an IEEE 1394 network. Further, the output peripherals 11 may be connected to one or more output devices via the other output connections 7, and thus arranged to supply data off-chip in other forms such as in decoded form having been decoded by on-chip decoders, or as encapsulated transport packets for off-chip storage or supply to an Ethernet or USB network.. Whatever the form or intermediate destination of the output, the ultimate use is for supply of the media content to one or more output devices such as a television screen and loudspeakers of the receiving user terminal 102, via which the user consumes the video and audio media.

In operation, the host CPU 9 runs drivers which control various components of the system such as the transport stream subsystem 8, system memory 12, and peripherals 11 via the configuration bus 16. The host CPU 9 may also receive interrupts from these components informing it of events occurring thereat, and the control by the driver software may operate in dependence on such interrupts. For example, the transport stream subsystem 8 may send interrupts to the host CPU 9 via the interrupt line 10.

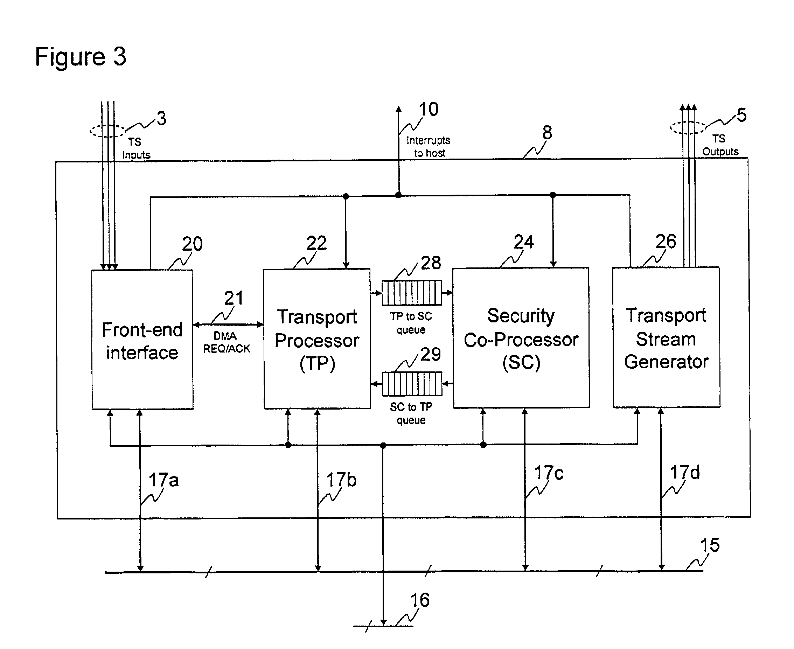

Under overall control of the host CPU 9, the transport stream subsystem 8 receives one or more of the input transport streams 2 from an external device (or potentially from an on-chip source such as on-chip storage). These are live transport streams, meaning they have strict real-time requirements. The input transport streams 2 are also encrypted. Then, as discussed in more detail in relation to Figure 3, the transport stream subsystem 8 operates in conjunction with the system memory 12 via the data bus 15 to filter (i.e. de-multiplex) the transport packets of the required program or programs, perform security processing to decrypt the packets, and perform any other required processing such as error correction and/or extracting the elementary stream data from the transport packets. The transport stream subsystem 8 then outputs a transport stream comprising the processed packets of the de-multiplexed program via transport stream outputs 5, or transfers the extracted elementary streams across the data bus 15 for output via peripherals 11.

As shown schematically in Figure 3, the transport stream subsystem comprises a front-end interface 20, a transport processor (TP) 22, a security co-processor (SC) 24, and a transport stream generator 26. Each of the transport processor 22 and security co-processor 24 comprises a central processing unit (CPU) for executing software (or more specifically firmware); but the front-end 20 and transport stream generator 26 are preferably dedicated hardware blocks, without a CPU, which do not execute software to perform their respective functions. The front-end interface 20 is connected to the transport stream input connections 3, and the transport stream generator 26 is connected to the transport stream outputs 5. Each of the front-end interface 20, transport processor 22, security co-processor 24 and transport stream generator 26 is connected to the data bus 15 via a respective bus interface 17a, 17b, 17c and 17d, thus coupling them to the system memory 12. Each of the front-end interface 20, transport processor 22,security co-processor 24 and transport stream generator 26 comprises a direct memory access (DMA) engine for reading and writing data to the system memory 12 via the bus 15. Each of the front-end interface 20, transport processor 22, security co-processor 24 and transport stream generator 26 is also connected to the configuration bus 16 and to the interrupt line or lines 10, thus coupling them to the host CPU 9. The front-end interface 20 is connected to the transport processor 22 via a DMA request and acknowledge interface (DMA REQ/ACK) 21.

Furthermore, in order to facilitate the transfer of packets directly between the transport processor 22 and the security co-processor 24, the transport stream subsystem additionally comprises two hardware packet queues in the form of first-in, first-out (FIFO) buffers 28 and 29. The first of the FIFOs 28 is connected in a first direction, from the transport processor (TP) 22 to the security co-processor (SC) 24. This first FIFO 28 may also be referred to herein as the TP to SC queue. The second of the FIFOs 29 is then connected in a second, opposite direction, from the security co-processor (SC) 24 to the transport processor (TP) 22. This second FIFO 29 may also be referred to herein as the SC to TP queue.

Note that each of these FIFO queues 28 and 29 is a separate, dedicated link for queuing and transferring packets between the two processors 22 and 24: they are separate from the data bus 15 and system memory 12, or any other such system-wide bus and/or memory, which in contrast are general purpose components that also allow transfer of packets or other data to or from other components of the system. The queues 28 and 29 are arranged to allow transfer of packets between only the transport processor 22 and security co-processor 24. Further, the system memory 12 is randomly accessible in that it allows access to an addressed choice of different locations within that memory, and similarly the data bus 15 allows access to an addressed choice of different destinations; whereas in contrast each queue 28 and 29 is constrained to operate in a first-in-first-out mode of operation, and provides only a single route from one fixed source to one fixed destination. A FIFO may comprise a shift register of a certain width, or for larger sizes of FIFO more likely a storage unit plus a set of read and write pointers. However, even in the latter case with the storage being a RAM, the FIFO still differs from the system memory RAM 12 in that it is still constrained by the pointers to the first-in-first-out operation and from an external point of view is not randomly accessible.

In operation, the front-end 20 receives and captures one or more input transport streams 2 via the input connections 3. As mentioned, these are live, real-time streams, typically comprising time-division multiplexed media content such as audio and video from a plurality of different programs. The input transport streams 2 may also be encrypted for security reasons. Most generally, the term encryption as used herein refers to any transformation of data to make it unintelligible to anyone except those knowing some special information, often referred to as the key. For example, the encryption could comprise scrambling.

After capturing the input streams, a second function of the front-end 20 is, where possible, to pre-filter the transport packets in order to discard those of any unwanted programs prior to processing by the transport processor (which amounts to de-multiplexing the desired program or programs from the transport stream). The front-end 20 does this by examining the packet IDs (PIDs) of the incoming transport packets and then discarding those which, on that basis, it can identify as not containing any information content relevant to the desired program. For example, the front end 20 may extract the PID value from the packet header and look it up in a table in system memory 12 via the bus interface 17a. In that case, if the PID look-up indicates that the packet is wanted then it writes that packet to system memory 12 using its DMA engine, but otherwise it discards the packet.

Through this hardware pre-filtering and buffering of live packets into system memory 12 prior to processing, the front-end 20 thus separates and decouples the live, real-time packet capture from the processor intensive and potentially variable length operations of the transport packet processing. This advantageously reduces the processing load in the transport processor 22, and in doing so reduces the real-time processing constraints, the criticality of the packet processing, and the chance of losing packets.

Note though that the front-end 20 cannot necessarily handle all filtering, and some filtering may still need to be left for the transport processor 22. The encryption of an input transport stream 2 may be packet based or block based. Where packet based, this means the encryption is on a packet-by-packet basis such that only the payload of each transport packet is encrypted and not the header, and therefore that the header of each individual transport packet can be read without decryption. In that case, the front-end 20 can filter out unwanted transport packets by examining the Packet ID (PID) in the packet header. However, where the encryption is block based, this means that multiple transport packets are encrypted together into a block, with both the payload and the headers of those packets being encrypted. In that case, only a block header of the overall block is readable without decryption, and so the front-end 20 cannot pre-filter the transport packets. Instead, the whole block, which may potentially include unwanted packets, must be processed by the security co-processor 24 and then any unwanted packets filtered by the transport processor 22 (see below).

Further, note that the payload of some transport packets may comprise a plurality of smaller data objects, referred to as "private table sections" or simply "sections". In some cases, the required content may be included in only one or some sections of a packet. The front-end 20 will not analyse the payload of a packet, and therefore the filtering of unwanted sections must instead be done by the transport processor 22.

In any case, the pre-filtered transport stream (filtered to the extent possible) is written by the DMA engine of the front-end 20 into a buffer data-structure in the system memory 12, via the bus interface 17a and data bus 15. The front-end 20 is preferably arranged to handle multiple independent live stream sources 2, in which case it writes the pre-filtered streams into separate respective buffers in the system memory 12.

The front-end 20 may also generate interrupts to the host 9 via the interrupt line 10 in order to indicate buffer status and error conditions. The front-end 20 may also add a timestamp tag to the packet from the current value of a counter.

The next stage depends on whether the buffered stream is packet-based encrypted or block-based encrypted. If packet based, the individual headers of the transport packets are unencrypted and the transport processor 22 can begin to retrieve those packets from system memory 12 immediately. However, if block based, multiple transport packets including their headers are encrypted together into larger blocks, and the blocks must be security processed to extract individual transport packets before the transport processor 22 can use them. Therefore in the block-based case, the host 9 writes block-related commands into system memory 12 via the data bus 15, and then sets a mailbox which signals for the security co-processor 24 to look for those commands. The security co-processor 24 then executes code which operates it to read the block-related commands and the blocks themselves from the system memory 12, via the bus interface 17c and data bus 15, and then perform the required security processing to extract the individual transport packets with at least unencrypted headers. The executed code then operates the security co-processor 24 to write the transport packets back to a buffer in system memory 12, again via the bus interface 17c and data bus 15. These extracted packets could be completely decrypted, but for preferred security at this stage could instead be written back as independently encrypted transport packets with encrypted payloads and only the headers being unencrypted.

The front-end 20 communicates the presence of packets in a system memory buffer to the transport processor 22 via the DMA REQ/ACK interface 21. The front-end 20 asserts the relevant request line of the REQ/ACK interface 21 when packets are available in the system memory buffer, and the transport processor 22 acknowledges via the REQ/ACK interface 21 when it begins processing the packets. This processing is achieved by executing code on the transport processor 22 which operates it as follows.

Upon detecting the relevant signal on the REQ/ACK interface 21, the transport processor 22 begins to retrieve the packets of a buffered transport stream from the system memory 12, which it does using its DMA engine via the bus interface 17b and data bus 15. In the case of multiple buffered streams, this could be from any desired stream or multiple streams.

Having begun to retrieve packets, the first task of the transport processor 22 is to examine their headers to determine the sequence of operations required to process the packets. For example, this may include decryption or other security processing, filtering (i.e. de-multiplexing), extraction of elementary data, and/or error correction, as well as output of the processed packets to a desired destination.

If the encryption is packet based, then unwanted packets will already have been filtered out by the front-end 20 as discussed above. However, if the encryption was block-based, the front-end 20 will have been unable to filter out unwanted packets from within the block and so instead the transport processor 22 may filter out the unwanted packets based on their PID once block-decrypted by the security co-processor 24.

If the encryption is packet based, the sequence of operations will include passing the packet to the security co-processor 24 for security processing such as decryption. Advantageously, the transport processor 22 does this by passing the encrypted packets along with packet based commands to the security co-processor 24 via the TP to SC queue 28 - without passing via the data bus 15 or system memory 12. The security co-processor 24 receives the secure, encrypted packets via the queue 28, and executes security code which applies one or more security algorithms to the secure packets to generate corresponding security-processed packets. The packets in their decrypted or otherwise security-cleared form may be referred to as "clear packets" or as containing "clear data" in their payload. A number of suitable encryption and corresponding decryption algorithms will be familiar to a person skilled in the art, e.g. scrambling and descrambling algorithms.

The code executed on the security co-processor 24 then operates it to return the security-processed packets back to the transport processor 22 via the SC to TP queue 29 - again without passing via the data bus 15 or system memory 12. The security co-processor 24 may also return status information via the SC to TP queue 29 regarding the status of the security-processed packets. An example of such status information may be an indication of whether a returned packet is one of a set (e.g. where one packet of the set is returned as clear data and others of the set are returned re-encrypted).

If the encryption was block-based but the security co-processor 24 wrote the block-decrypted transport packets back to system memory 12 in individually encrypted form (i.e. packet-based encrypted form), then the above process of transferring packets via queues 28 and 29 for security processing may still be required. However, if the security co-processor 24 wrote the block-decrypted packets back to system memory 12 in clear form, then no further security processing may be required.

The security co-processor 24 may support any of a variety of different encryption and decryption algorithms and chaining modes. This may include decryption of variable length blocks.

Once the clear packets are returned to the transport processor 24, it may execute code to perform further processing operations. For example, it may perform error correction using error correction codes (ECC) in the packets, if present, or handling of transport errors or continuity count errors. Such error techniques will be familiar to a person skilled in the art. E.g. cyclic redundancy checks (CRC) or checksum error checks may be performed, and the transport processor 22 may notify the host driver of any CRC or checksum error via the interrupt line 10.

Further, the transport processor 22 may extract a timestamp value from the packet header and associate this with the packet's arrival time so that clock recovery can be performed. Further, the transport processor 22 may replace specific or unwanted packets by alternative packets.

As another example, if the payloads of packets contain sub-packets in the form of sections, then the transport processor 24 may perform section filtering to remove any unwanted sections from packets with specified PIDs. E.g. such filtering may allow matching of section data may allow matching of section headers against up to 16 bytes where each bit can be individually masked. Other custom filtering functions may also be supported. Further, CRCs or checksums may be performed on section data, and the transport processor may notify the host driver of any CRC or checksum error in an extracted section. Further, the transport processor 22 may notify the host driver of the availability of requested section data in system memory 12.

As yet another example of further packet processing, the transport processor 22 may perform transport packet indexing. This may involve detection and notification of indexing events indicated by various flag settings in the packet headers. It may involve detection and notification of the locations of start codes in the payloads of packets so that indexes can be generated for recorded streams, allowing rapid access and trick modes. Further, it may involve detection and notification of the locations of start codes in the extracted elementary stream outputs to simplify decoder control

As another example, if required, the transport processor may also extract the elementary stream data in order to reconstruct the de-multiplexed elementary packets from the transport packets.

Following any such operations, the transport processor completes the transport processing by outputting the processed packets to the required destination. If the output is to be in the form of a partial transport stream, e.g. with the required program or programs having been de-multiplexed into the partial stream, then this outputting comprises writing the packets of the output transport stream to system memory 12, via the bus interface 17b and data bus 15. The transport stream generator 26 then retrieves those packets from the system memory 12, via bus interface 17d and the data bus 15, multiplexes them into an output transport stream 4, and outputs that stream via the output transport stream connection 5. If on the other hand the output is to be in another form such as an encapsulated stream to a USB or Ethernet output, then the outputting may be by means of a DMA transfer from the transport processor 22 to the peripherals 11. Output transport streams or encapsulated streams could also be written to system memory 12 or an external hard drive 106 for storage. As another alternative, if elementary streams are extracted by the transport processor 22, then these elementary streams can be sent to on-chip decoders for decoding and output to, say, a TV screen and loudspeakers.

Further, if required prior to output, the transport processor 22 could send the clear packets back to the security co-processor 24 for re-encryption via the TP to SC queue 28, and the security co-processor 24 would then execute code to return corresponding re-encrypted packets to the transport processor 22 via the SC to TP queue 29. Alternatively the output could be in decrypted form.

The above embodiments provide an improved transport stream de-multiplexer architecture, which is programmable and flexible whilst at the same time providing performance comparable more hardware based solutions.

Using two different processors, one for transport processing operations and one for security processing operations, is advantageous because it reduces the load on the transport processor. That is, it reduces the perturbation to the transport processing, in terms of processing cost, caused by the requirement for security processing. So from the transport processor's point of view, the security aspects of the system are simply allowed to take care of themselves. Thus the speed of processing is increased, which is desirable when processing real-time streams.

The use of a dedicated, hardware queues 28 and 29 between the transport processor 22 and security processor 24 is particularly advantageous. Firstly, it ensures that packets are not shunted back to system memory 12 unnecessarily, thereby reducing the load on the system memory bandwidth. If the transport processor 22 and security processor 24 had to communicate packets by reading and writing them to system memory 12 via the system data bus 15 then this would put an undesirable load on the system memory 12, and take up an undesirable amount of time in memory access and bus arbitration. By instead providing hardware queues 28 and 29 for packet transfer, the speed of transfer is increased by reducing the load on system memory and the number of memory accesses required.

Secondly, if the packets had to pass through system memory 12 during security operations then this would leave the security of the system open to hacking. However, using the dedicated queues 28 and 29, the system is less vulnerable to hacking since the packets are kept out of general memory during security operations. It allows the security aspects to be handled in isolation from the rest of the system, and ensures a clear distinction in software between secure and non-secure operations.

For example, the use of hardware queues allows clear packet data to be isolated from the rest of the system when that data is only used temporarily, e.g. for packet payload indexing, where the clear data is only used to find start codes for record index creation and is subsequently thrown away.

Further, the above also provides flexibility in the communication mechanism between the processors 22 and 24, which allows firmware defined mechanisms to transfer different types of data between them. For example, there could be a transfer of an encrypted packet in one direction and the return of both a clear packet and a re-encrypted packet in the other. Future firmware revisions could enhance the communication to pass additional data if requirements change.

The above system can be used for example in a satellite, terrestrial or cable television receiver 102. In a preferred embodiment, the system is programmed to support the DVB, DSS and/or DirecTV standards.

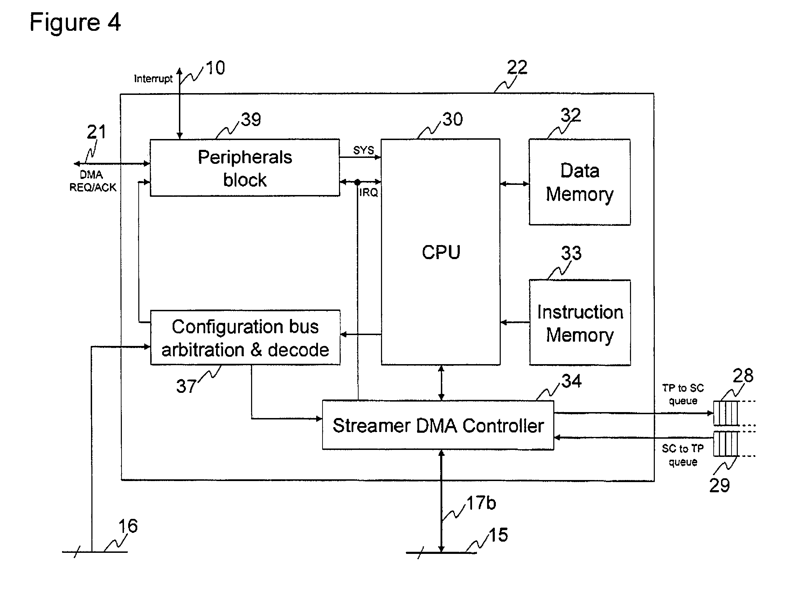

An example architecture of the transport processor 22 is shown schematically in Figure 4. Here, the transport processor 22 comprises a CPU 30, a data memory 32, an instruction memory 33, a streaming DMA engine 34, a configuration bus arbitration and decode block 37, and a peripherals block 39 comprising a plurality of peripherals.

The data memory 32 and instruction memory 33 are each coupled to the CPU 30 via respective interfaces. The CPU 30 executes code fetched from the instruction memory 33 for performing the transport packet processing described above, and uses the data memory 32 for reading and writing data where required in such processing. The host 9 is also able to access the data memory 30 and instruction memory 33 via the DMA engine 34.

The CPU 30 is interfaced to the data bus 15 and system memory 12 via the DMA engine 34, which offloads the external memory accesses from the CPU 30. The DMA engine 34 also includes interfaces which allow the CPU 30 to send commands and packets to the security co-processor 24 via the TP to SC queue 28, and to receive packets and status information back via the SC to TP queue 29.

To control various aspects of the CPU function like reset, start-up and power-down, the memory-mapped peripherals block 39 is provided (which can control such aspects of the CPU 30 via the signal marked SYS). The peripherals 39 may also include a mailbox function to allow the host 9 to generate an interrupt (IRQ) to the CPU 30 and vice versa via the interrupt line or lines 10. The peripherals 39 may also include some general purpose I/O registers, and a timer and counter function for the CPU 30.

As discussed earlier, the transport processor 22 needs to communicate with the front-end's DMA block via its DMA REQ/ACK interface 21. This is achieved by wiring the DMA request input signals to one of the general purpose input functions inside the peripherals block 39, and the DMA acknowledgement outputs to a general purpose output function.

In order for the host 9 and local CPU 30 to access the peripherals 39 and DMA engine 34, there is provided a configuration bus arbitration and decode block 37, which arbitrates between the host 9, local CPU 30 and the security co-processor's CPU, and then decodes the address for the relevant block.

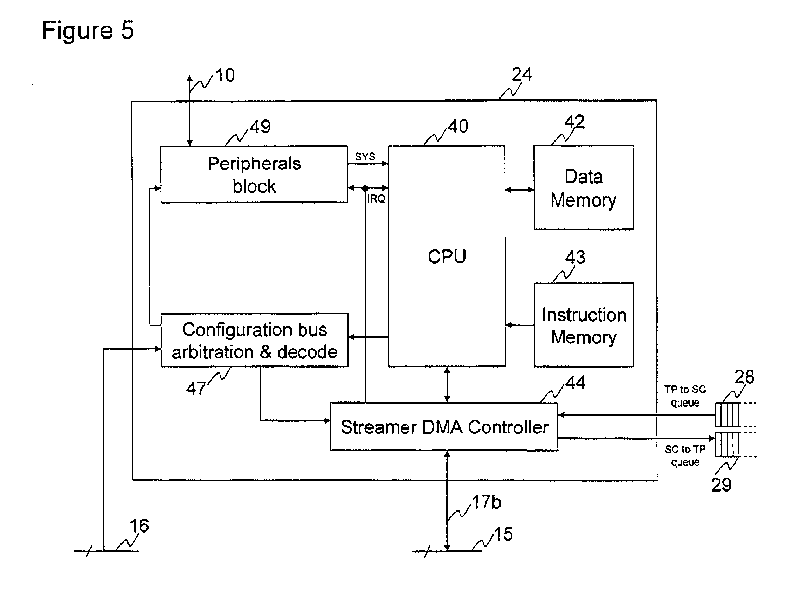

An example architecture of the security co-processor 24 is shown schematically in Figure 5. Here, the security co-processor 24 comprises a CPU 40, a data memory 42, an instruction memory 43, a streaming DMA engine 44, a configuration bus arbitration and decode block 47, and a peripherals block 49 comprising a plurality of peripherals.

The data memory 42 and instruction memory 43 are each coupled to the CPU 40 via respective interfaces. The CPU 40 executes code fetched from the instruction memory 43 for performing the security processing described above, and uses the data memory 42 for reading and writing data where required in such processing. For example, security keys may be held in the data memory 42 whilst the instructions making up the security algorithms may be held in the instruction memory 43. The host 9 is also able to access the data memory 40 and instruction memory 43 via the DMA engine 44.

The CPU 40 is interfaced to the data bus 15 and system memory 12 via the DMA engine 44, which offloads the external memory accesses from the CPU 40. The DMA engine 44 also includes interfaces which allow the CPU 40 to receive commands and packets from the transport processor 22 via the TP to SC queue 28, and to return packets and status information back via the SC to TP queue 29.

Again, to control various aspects of the CPU function like reset, start-up and power-down, the memory-mapped peripherals block 49 is provided (which can control such aspects of the CPU 40 via the signal marked SYS). The peripherals 49 may also include a mailbox function to allow the host 9 to generate an interrupt (IRQ) to the CPU 40 and vice versa via the interrupt line or lines 10. The peripherals 49 may also include some general purpose I/O registers, and a timer and counter function for the CPU 40.

Further, in order for the host 9 and local CPU 40 to access the peripherals 49 and DMA engine 44, there is provided a configuration bus arbitration and decode block 47, which arbitrates between the host 9 and local CPUs 30 and 40, and then decodes the address for the relevant block.

The security co-processor 24 may have some additional security features. For example, it may comprise one or more one-time-writeable or many-time-writeable fuse latches on the chip, such as laser fuses, arranged so as to allow one or more of the security processing functions of the co-processor 24 to be selectively enable or disabled. Further, certain address ranges of the security co-processor 24 may be blocked form external access, particularly not being accessible to the host 9 or otherwise via a system-wide bus such as data bus 15. E.g. the regions of the instruction memory 43 containing the security algorithms such as encryption or decryption algorithms or the regions of the data memory 42 containing keys may only be accessible to the local CPU 40 and not generally accessible via the system-wide bus 15.

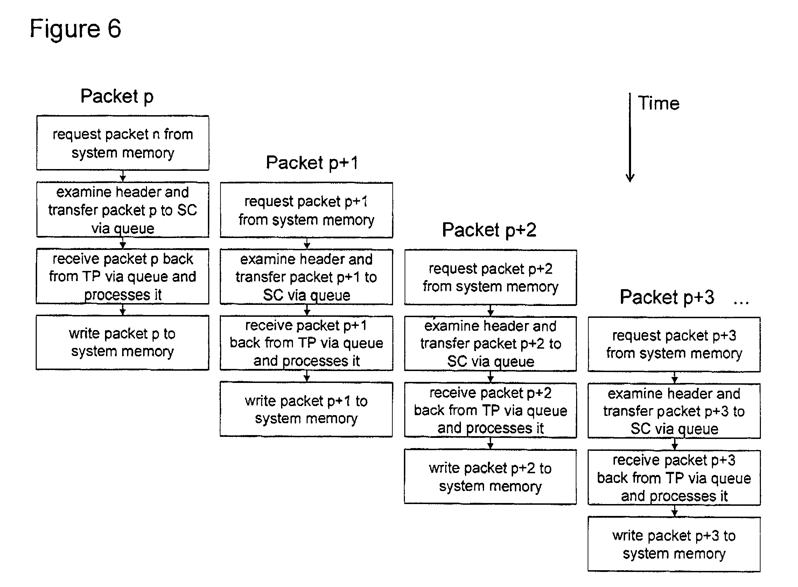

A preferred method of operating the transport processor is now described in relation to the flow chart of Figure 6. Particularly, by executing appropriate software on the transport processor's CPU 30, the transport processor 22 is operated to pipeline the transport packet processing so as to maximise parallelism in the packet processing. To represent this pipelining schematically in Figure 6, time is shown increasing down the page, with steps shown horizontally aligned being performed substantially in parallel, i.e. concurrently.

In a first step of processing a packet p, the transport processor 22 issues a read request for the packet p to be retrieved from the system memory 12 via the data bus 15.

Following that, in a first step of processing a subsequent packet p+1, the transport processor 22 requests the packet p+1 to be retrieved from the system memory 12 via the data bus 15. Substantially in parallel (i.e. concurrently) with the retrieval of packet p+1 from system memory, a second step of processing packet p is performed whereby the transport processor 22 processes the header of the packet p and sends it to the security co-processor 24 via the TP to SC queue 28 for security processing, e.g. decryption or encryption.

Following on again, a first step of processing a next subsequent packet p+2 is performed whereby the transport processor 22 requests the packet p+2 from the system memory 12. Substantially in parallel with the retrieval of packet p+2, a second step of processing packet p+1 is performed whereby the transport processor 22 processes the header of the packet p+1 and sends it to the security co-processor 24 via the TP to SC queue 28 for security processing. Further, substantially in parallel with the retrieval of packet p+1 from system memory 12 and with the security processing of packet p by the security co-processor 24, a third step of processing packet p is performed whereby the packet p is returned from the security co-processor 24 via the SC to TP queue 29 and has its payload processed by the transport processor 22.

Following on again, a first step of processing a next subsequent packet p+3 is performed whereby the transport processor 22 requests the packet p+3 from the system memory 12. Substantially in parallel with the retrieval of packet p+3, a second step of processing packet p+2 is performed whereby the transport processor 22 processes the header of the packet p+2 and sends it to the security co-processor 24 via the TP to SC queue 28 for security processing. Further, substantially in parallel with the retrieval of packet p+3 from system memory 12 and with the security processing of packet p+2 by the security co-processor 24, a fourth step of processing packet p is performed whereby the transport processor 22 issues a write request to write the packet p to system memory 12 once its payload has been processed. Further, substantially in parallel with the retrieval of packet p+3 from system memory 12, with the security processing of packet p+2 by the security co-processor 24, and with the writing of packet p to system memory 12, a third step of processing packet p+1 is performed whereby the packet p is returned from the security co-processor 24 via the SC to TP queue 29 and has its payload processed by the transport processor 22.

The method may continue in this pipelined fashion, with each next subsequent packet p+4, p+5, etc. being processed one of the four pipelined steps on in time from the previous packet. Thus up to four packets may be being processed at any one time, each at a different one of the four described pipeline stages.

This technique maximises parallelism in the packet processing, taking full advantage of delays in, for example, accessing packets from system memory 12, or the delay associated with packet decryption in the security co-processor 24. By de-coupling the packet processing tasks from the data movement in the system, maximum use is made of the available processor cycles.

Note that the parallel, concurrent processing is not (or at least need not) be though parallel execution units. Instead, it is achieved by scheduling the different concurrent tasks through a single execution unit so as to take advantage of the inherent delays in each of the steps to execute another of the steps. That is, by using the time spent waiting for a memory access, or the time spent waiting for a packet to be security processed, to execute another processing stage of another packet.

For example, there will be a delay between the transport processor 22 issuing a read request for a packet and that packet being returned from system memory 12. So whilst the transport processor 22 is waiting for packet p+3 to be returned from memory, it may use this otherwise "dead" time to process the header of packet p+2 and transfer it to the security co-processor 24 for security processing. This security processing will also involve a delay, so whilst the transport processor 22 is waiting for packet p+3 to be retrieved from memory and waiting for packet p+2 to be returned from the security processor 24, it may use this time to issue a write request for packet p to be written to system memory 12. This write will also involve a delay, so whilst the transport processor 22 is waiting for packet p+3 to be retrieved from memory, waiting for packet p+2 to be returned from the security processor 24, and waiting for the writing of packet p to system memory 12 to be complete, it may use this time to perform payload processing on packet p+1.

Note also that this pipelining technique can have an application to any system having a packet processing processor and a separate security processor. Although it has been found to be particularly efficient in the case where the two processors are connected by hardware queues, the described pipelining technique may also be used in a case where the two processors exchange packets by other means, for example via a system memory or DMA engine. Further, nor is it essential that each of the above-describe steps are exactly aligned in time: the important point is that at least some "dead" time in waiting for an operation on one packet to complete is used to begin another operation on another packet.

It will be appreciated that the above embodiments are described only by way of example. In other embodiments for instance, the connection of one processor to another for security purposes via hardware queues could have an application to other types of streams than transport streams. Further, although in the above the queues 28 and 29 have been described as first-in, first-out queues, in alternative embodiments a different queuing protocol could be implemented such as priority queuing. Further, although the above security co-processor has been described as performing all required security operations, in other embodiments it could output only partially security-processed packets, leaving some other part of the security processing for example for the transport processor, output apparatus or some other component. Other applications and configurations may be apparent to the person skilled in the art given the disclosure herein. The scope of the invention is not limited by the described embodiments, but only by the following claims.

## Claims

1. A system (8) for processing packet streams, the system comprising:
a system data-bus (15) for transferring packets of data;
a system memory (12) connected to the data-bus (15) for storing packets;
a first programmable processor (22) connected to the data-bus (15), arranged to receive an input stream comprising secure packets; and
a second programmable processor (24) connected to the data-bus (15); the system being **characterised by**:
the second processor (24) being programmed to perform security processing by applying one or more security algorithms to the secure packets to generate security-processed packets; the system further comprising:
first packet queuing circuitry (28) connected between the first processor (22) and the second processor (24), separate from said data-bus (15) and memory (12), operable to queue secure packets for transfer from the first processor (22) to the second processor (24); and
second packet queuing circuitry (29) connected between the first processor (22) and the second processor (24), separate from said data-bus (15) and memory (12), operable to queue security-processed packets for transfer from the second processor (24) to the first processor (22);
wherein the first processor (22) is programmed to transfer the secure packets to the second processor (24) via the first queuing circuitry (28) for said security processing; the second processor (24) is programmed to return the security-processed packets to the first processor (22) via said second queuing circuitry (29); and
the first processor (22) is programmed to further process the security-processed packets, other than by applying a security algorithm, to generate output data for output to a user output apparatus.

2. The system (8) of claim 1, wherein the first queuing circuitry (28) comprises a first-in-first-out buffer connected in a first direction to queue packets for transfer from the first processor (22) to the second processor (24), and the second queuing circuitry (29) comprises a first-in-first-out buffer connected in a second direction to queue packets for transfer from the second processor (24) to the first processor (22).

3. The system (8) of claim 1 or 2, wherein each packet comprises a header and a payload, and said security processing comprises decrypting the payloads of the packets.

4. The system (8) of claim 3, wherein said further processing comprises operating on decrypted payloads of the packets

5. The system (8) of any preceding claim, comprising front-end circuitry (20) connected to the data-bus (15), arranged to receive the input stream and write the secure packets of that stream to the system memory (12) via said data-bus (15); wherein the first processor (22) is programmed to receive the input stream by retrieving the secure packets from the system memory (12) via said data-bus (15).

6. The system (8) of claim 5, wherein said input stream is an input transport stream comprising secure packets of a plurality of multiplexed streams, each packet comprising a header and a payload, and the front-end circuitry (20) comprises filtering circuitry arranged to read the headers to select only the secure packets of one or more desired multiplexed streams to write to the system memory (12).

7. The system (8) of claim 5 or 6, wherein said input stream is an input transport stream comprising secure packets of a plurality of multiplexed streams, each packet comprising a header and a payload, and the first processor (22) is programmed to read the headers to select only the secure packets of one or more desired multiplexed streams for said security processing and further processing.

8. The system (8) of claim 4 or any claim dependent thereon, wherein each packet comprises a header and a payload, the payload of one or more of the packets comprises a plurality of sub-packets, and said operation of the first processor on the decrypted payloads comprises filtering out unwanted sub-packets.

9. The system (8) of claim 4 or any claim dependent thereon, wherein said operation of the first processor (22) on one or more of the decrypted payloads comprises using the payload to index the packet.

10. The system (8) of claim 9, wherein the first processor (22) is programmed to discard the decrypted payload of the indexed packet after indexing.

11. The system (8) of any preceding claim, wherein:
said input stream is an input transport stream comprising secure packets of a plurality of multiplexed streams;
the first processor (22) is programmed to generate the output data in the form of output packets for output to the user output apparatus, and to write the output packets to the system memory (12) via said data-bus (15); and
the system (8) comprises transport stream generation circuitry (26) arranged to retrieve the output packets from the system memory (12) via said data-bus (15), arrange them into an output transport stream comprising secure packets of a plurality of multiplexed streams, and output the output transport stream to the user apparatus as an output stream.

12. The system (8) of any preceding claim, wherein each packet comprises a header and a payload, and the first processor (22) is programmed to assess one or more headers of the secure packets to determine a sequence of operations to be performed before subsequently transferring the secure packets to the second processor (24) for security processing.

13. The system (8) of claim 5 or any claim dependent thereon, wherein:
each packet comprises a header and a payload, and both the headers and the payloads of a plurality of said packets are encrypted together into an encrypted block;
the front-end circuitry (20) is arranged to receive and write said block to the system memory (12); and
the second processor (24) is programmed retrieve said block and perform a perform a block-based decryption to extract the packets of said block, then write the extracted packets back to the system memory (12) prior to said retrieval by the first processor (22).

14. The system (8) of any preceding claim, wherein the second processor (24) is arranged to return status information regarding the security-processed packets to the first processor (22) via the second queuing circuitry (29).

15. The system (8) of any preceding claim, wherein some address ranges of the second processor (24) are blocked from external access.

16. A method of processing packet streams, the method comprising:
at a first programmable processor (22) connected to a second programmable processor (24) and system memory (12) via a data-bus (15), receiving an input stream comprising secure packets; the method being **characterised by**:
using first packet queuing circuitry (28) connected between the first processor (22) and the second processor (24), separate from said data-bus (15) and memory (12), to queue the secure packets for transfer from the first processor (22) to the second processor (24);
at the second processor (24), executing code to perform security processing by applying one or more security algorithms to the secure packets received via said first queuing circuitry (28) to generate security-processed packets;
using second packet queuing circuitry (29) connected between the first processor (22) and the second processor (24), separate from said data-bus (15) and memory (12), to queue the security-processed packets for transfer from the second processor (24) to the first processor (22); and
executing code on the first processor (22) to further process the security-processed packets received via the second queuing circuitry (29), other than by applying a security algorithm, to generate output data for output to a user output apparatus.

## Patentansprüche

1. System (8) zur Verarbeitung von Paketströmen, wobei das System umfasst:
einen Systemdatenbus (15) zum Transferieren von Datenpaketen;
einen Systemspeicher (12), der zum Speichern von Paketen mit dem Datenbus (15) verbunden ist;
einen ersten programmierbaren Prozessor (22), der mit dem Datenbus (15) verbundenen ist, der eingerichtet ist, einen sichere Pakete umfassenden Eingabestrom zu empfangen; und
einen zweiten programmierbaren Prozessor (24), der mit dem Datenbus (15) verbundenen ist; das System **dadurch gekennzeichnet ist, dass**:
der zweite Prozessor (24) programmiert ist, Sicherheitsverarbeitung durch Anwenden eines oder mehrerer Sicherheitsalgorithmen auf die sicheren Pakete auszuführen, um hinsichtlic Sicherheit verarbeitete Pakete zu generieren; das System weiter umfassend:
erste Paket-Warteschlangenschaltung (28), die zwischen dem ersten Prozessor (22) und dem zweiten Prozessor (24), separat vom besagten Datenbus (15) und dem Speicher (12) verbunden ist, betriebsfähig, sichere Pakete für Transfer vom ersten Prozessor (22) zum zweiten Prozessor (24) einzureiben; und
zweite Paket-Warteschlangenschaltung (29), die zwischen dem ersten Prozessor (22) and dem zweiten Prozessor (24), separat vom besagten Datenbus (15) und dem Speicher (12) verbunden ist, betriebsfähig, hinsichtlich Sicherheit verarbeitete Pakete für Transfer vom zweiten Prozessor (24) zum ersten Prozessor (22) einzureiben; und
wobei der erste Prozessor (22) programmiert ist, die sicheren Pakete über die erste Warteschlangenschaltung (28) für die besagte Sicherheitsverarbeitung zum zweiten Prozessor (24) zu transferieren; der zweite Prozessor (24) programmiert ist, die hinsichtlich Sicherheit verarbeiteten Pakete über die besagte zweite Warteschlangenschaltung (29) an den ersten Prozessor (22) zurückzusenden; und
der erste Prozessor (22) programmiert ist, die hinsichtlich Sicherheit verarbeiteten Pakete, anders als durch Anwendung eines Sicherheitsalgorithmus, weiter zu verarbeiten, um Ausgabedaten zur Ausgabe an eine Benutzerausgabevorrichtung zu generieren.

2. System (8) nach Anspruch 1, wobei die erste Warteschlangenschaltung (28) einen FIFO-Puffer umfasst, der in einer ersten Richtung verbunden ist, um Pakete zum Transfer vom ersten Prozessor (22) zum zweiten Prozessor (24) einzureihen, und wobei die zweite Warteschlangenschaltung (29) einen FIFO-Puffer umfasst, der in eine zweite Richtung verbunden ist, um Pakete zum Transfer vom zweiten Prozessor (24) zum ersten Prozessor (22) einzureihen.

3. System (8) nach Anspruch 1 oder 2, wobei jedes Paket einen Header und eine Nutzlast umfasst, und die besagte Sicherheitsverarbeitung die Entschlüsselung der Pakete umfasst.

4. System (8) nach Anspruch 3, wobei die besagte weitere Verarbeitung Arbeitsverrichtung an entschlüsselten Nutzlasten der Pakete umfasst.

5. System (8) nach einem beliebigen vorangehenden Anspruch, das Front-End-Schaltung (20) umfasst, die mit dem Datenbus (15) verbunden ist, eingerichtet ist, den Eingabestrom zu empfangen und die sicheren Pakete jenes Stroms über den besagten Datenbus (15) an den Systemspeicher (12) zu schreiben; wobei der erste Prozessor (22) programmiert ist, den Eingabestrom durch Abrufen der sicheren Pakete über den besagten Datenbus (15) aus dem Systemspeicher (12) zu empfangen.

6. System (8) nach Anspruch 5, wobei der besagte Eingabestrom ein Eingabetransportstrom ist, der sichere Pakete einer Vielheit von multiplexierten Strömen umfasst, jedes Paket einen Header und eine Nutzlast umfasst, und die Front-End-Schaltung (20) Filterschaltung umfasst, die eingerichtet ist, die Header zu lesen, um nur die sicheren Pakete eines oder mehrerer erwünschter multiplexierter Ströme zum Schreiben an den Systemspeicher (12) zu selektieren.

7. System (8) nach Anspruch 5 oder 6, wobei der besagte Eingabestrom ein Eingabetransportstrom ist, der sichere Pakete einer Vielheit von multiplexierten Strömen umfasst, jedes Paket einen Header und eine Nutzlast umfasst, und der erste Prozessor (22) programmiert ist, die Header zu lesen, um nur die sicheren Pakete eines oder mehrerer erwünschter multiplexierten Ströme zur besagten Sicherheitsverarbeitung und weiteren Verarbeitung zu selektieren.

8. System (8) nach Anspruch 4 oder einem beliebigen davon abhängigen Anspruch, wobei jedes Paket einen Header und eine Nutzlast umfasst, die Nutzlast eines oder mehrerer der Pakete eine Vielheit von Subpaketen umfasst und die besagte Operation des ersten Prozessors an den entschlüsselten Nutzlasten das Herausfiltern unerwünschter Subpakete umfasst.

9. System (8) nach Anspruch 4 oder einem beliebigen davon abhängigen Anspruch, wobei die besagte Operation des ersten Prozessors (22) an einer oder mehreren der entschlüsselten Nutzlasten die Verwendung der Nutzlast zum Indexieren des Pakets umfasst.

10. System (8) nach Anspruch 9, wobei der erste Prozessor (22) programmiert ist, die entschlüsselte Nutzlast des indexierten Pakets nach dem Indexieren zu verwerfen.

11. System (8) nach einem beliebigen vorangehenden Anspruch, wobei:
der besagte Eingabestrom ein Eingabetransportstrom ist, der sichere Pakete einer Vielheit von multiplexierten Strömen umfasst;
der erste Prozessor (22) programmiert ist, die Ausgabedaten in Form von Ausgabepaketen zur Ausgabe an die Benutzerausgabevorrichtung zu generieren und die Ausgabepakete über den besagten Datenbus (15) an den Systemspeicher (12) zu schreiben; und
das System (8) Transportstrom-Generationsschaltung (26) umfasst, die eingerichtet ist, die Ausgabepakete aus dem Systemspeicher (12) über den besagten Datenbus (15) abzurufen, sie in einen Ausgabetransportstrom zu arrangieren, der sichere Pakete einer Vielheit multiplexierter Ströme umfasst und Ausgabe des Ausgabetransportstroms an die Benutzervorrichtung als einen Ausgabestrom.

12. System (8) nach einem beliebigen vorangehenden Anspruch, wobei jedes Paket einen Header und eine Nutzlast umfasst und der erste Prozessor (22) programmiert ist, um eine oder mehrere Header der sicheren Pakete zu beurteilen, um eine auszuführende Reihenfolge von Operationen zu bestimmen, bevor die sicheren Pakete anschließend zur Sicherheitsverarbeitung an den zweiten Prozessor (24) transferiert werden.

13. System (8) nach Anspruch 5 oder einem beliebigen davon abhängigen Anspruch, wobei:
jedes Paket einen Header und eine Nutzlast umfasst und sowohl die Header als auch die Nutzlasten einer Vielheit der besagten Pakete in einem verschlüsselten Block miteinander verschlüsselt sind;
die Front-End-Schaltung (20) eingerichtet ist, den besagten Block zu empfangen und an den Systemspeicher (12) zu schreiben; und
der zweite Prozessor (24) programmiert ist, den besagten Block abzurufen eine eine blockbasierte Entschlüsselung auszuführen, um die Pakete des besagten Blocks zu extrahieren und dann die extrahierten Pakete, vor dem besagten Abruf durch den ersten Prozessor (22), an den Systemspeicher (12) zurück zuschreiben.

14. System (8) nach einem beliebigen vorangehenden Anspruch, wobei der zweite Prozessor (24) eingerichtet ist, Statusinformation hinsichtlich der bezüglich Sicherheit verarbeiteten Pakete über die zweite Warteschlangenschaltung (29) an den ersten Prozessor (22) zurückzugeben.

15. System (8) nach einem beliebigen vorangehenden Anspruch, wobei einige Adressenbereiche des zweiten Prozessors (24) gegen externen Zugriff blockiert sind.

16. Verfahren zur Verarbeitung von Paketströmen, wobei das Verfahren umfasst:
an einem ersten programmierbaren Prozessor (22), der mit einem zweiten programmierbaren Prozessor (24) und Systemspeicher (12) über einen Datenbus (15) verbunden ist, Empfangen eines Eingabestroms, der sichere Pakete umfasst, wobei das Verfahren **gekennzeichnet ist, durch**:
Verwenden erster Paket-Warteschlangenschaltung (28), die zwischen dem ersten Prozessor (22) und dem zweiten prozessor (24), separat vom besagten Datenbus (15) und dem Speicher (12) verbunden ist, um die sicheren Pakete für Transfer vom ersten Prozessor (22) zum zweiten Prozessor (24) einzureiben;
am zweiten Prozessor (24), Ausführen von Code zum Durchführen von Sicherheitsverarbeitung **durch** Anwenden eines oder mehrerer Sicherheitsalgorithmen auf die sicheren Pakete, die über die besagte erste Warteschlangenschaltung (28) empfangen wurde, um hinsichtlich Sicherheit verarbeitete Pakete zu generieren;
Verwenden zweiter Paket-Warteschlangenschaltung (29), die zwischen dem ersten Prozessor (22) und dem zweiten Prozessor (24), separat vom besagten Datenbus (15) und dem Speicher (12) verbunden ist, um die hinsichtlich Sicherheit verarbeiteten Pakete für Transfer vom zweiten Prozessor (24) zum ersten Prozessor (22) einzureihen; und
Ausführen von Code am ersten Prozessor (22), um die hinsichtlich Sicherheit verarbeiteten Pakete, die über die zweite Warteschlangenschaltung (29) empfangen wurden, anders als **durch** Anwenden eines Sicherheitsalgorithmus, weiter zu verarbeiten, um Ausgabedaten zur Ausgabe an eine Benutzerausgabevorrichtung zu generieren.

## Revendications

1. Système (8) pour traiter des flux de paquets, ce système comprenant :
un bus de données de système (15) pour transférer des paquets de données ;
une mémoire de système (12) connectée au bus de données (15) pour stocker des paquets ;
un premier processeur programmable (22) connecté au bus de données (15), agencé de façon à recevoir un flux d'entrée comprenant des paquets sûrs ; et
un deuxième processeur programmable (24) connecté au bus de données (15) ; le système étant **caractérisé par** :
le deuxième processeur (24) étant programmé de façon à effectuer un traitement de sécurité en appliquant un ou plusieurs algorithmes de sécurité aux paquets sûrs afin de générer des paquets ayant subi un traitement de sécurité ; le système comprenant en outre ;
une première circuiterie de mise en file d'attente des paquets (28) connectée entre le premier processeur (22) et le deuxième processeur (24), séparée dudit bus de données (15) et de ladite mémoire (12), pouvant être utilisée pour mettre en file d'attente les paquets ayant subi un traitement de sécurité destinés à être transférés du premier processeur (22) au deuxième processeur (24) ; et
une deuxième circuiterie de mise en file d'attente des paquets (29) connectée entre le premier processeur (22) et le deuxième processeur (24), séparée dudit bus de données (15) et de ladite mémoire (12), pouvant être utilisée pour mettre en file d'attente les paquets ayant subi un traitement de sécurité destinés à être transférés du deuxième processeur (24) au premier processeur (22) ;
dans lequel le premier processeur (22) est programmé de façon à transférer les paquets sûrs au deuxième processeur (24) via la première circuiterie de mise en file d'attente (28) pour ledit traitement de sécurité ; le deuxième processeur (24) est programmé de façon à ramener les paquets ayant subi le traitement de sécurité au premier processeur (22) via ladite deuxième circuiterie de mise en file d'attente (29) ; et
le premier processeur (22) est programmé de façon à faire subir un traitement supplémentaire aux paquets ayant subi le traitement de sécurité, autrement qu'en appliquant un algorithme de sécurité, afin de générer des données de sortie destinées à être fournies à un appareil de sortie d'un utilisateur.

2. Système (8) selon la revendication 1, dans lequel la première circuiterie de mise en file d'attente (28) comprend un tampon FIFO connecté dans un premier sens pour mettre en file d'attente des paquets destinés à être transférés du premier processeur (22) au deuxième processeur (24), et la deuxième circuiterie de mise en file d'attente (29) comprend un tampon FIFO connecté dans un deuxième sens pour mettre en file d'attente des paquets destinés à être transférés du deuxième processeur (24) au premier processeur (22).

3. Système (8) selon la revendication 1 ou 2, dans lequel chaque paquet comprend un en-tête et des données utiles, et ledit traitement de sécurité comprend le déchiffrage des données utiles des paquets.

4. Système (8) selon la revendication 3, dans lequel ledit traitement supplémentaire comprend une opération sur des données utiles déchiffrées des paquets.

5. Système (8) selon l'une quelconque des revendications précédentes, comprenant une circuiterie d'entrée (20) connectée au bus de données (15), agencée de façon à recevoir le flux d'entrée et à écrire les paquets sûrs de ce flux dans la mémoire du système (12) via ledit bus de données (15) ; dans lequel le premier processeur (22) est programmé de façon à recevoir le flux d'entrée en récupérant les paquets sûrs de la mémoire du système (12) via ledit bus de données (15).

6. Système (8) selon la revendication 5, dans lequel ledit flux d'entrée est un flux de transport d'entrée comprenant des paquets sûrs d'une pluralité de flux multiplexés, chaque paquet comprenant un en-tête et des données utiles, et la circuiterie d'entrée (20) comprend une circuiterie de filtrage agencée de façon à lire les en-têtes pour ne sélectionner que les paquets sûrs d'un ou de plusieurs flux multiplexés désirés écrire dans la mémoire du système (12).

7. Système (8) selon la revendication 5 ou 6, dans lequel ledit flux d'entrée est un flux de transport d'entrée comprenant des paquets sûrs d'une pluralité de flux multiplexés, chaque paquet comprenant un en-tête et des données utiles, et le premier processeur (22) est programmé de façon à lire les en-têtes pour ne sélectionner que des paquets sûrs d'un ou de plusieurs flux multiplexés désirés pour ledit traitement de sécurité et ledit traitement supplémentaire.

8. Système (8) selon la revendication 4 ou n'importe quelle revendication dépendante de celle-ci, dans lequel chaque paquet comprend un en-tête et des données utiles, les données utiles d'un ou de plusieurs des paquets comprennent une pluralité de sous-paquets, et ladite opération du premier processeur sur les données utiles déchiffrées comprend l'élimination par filtrage des sous-paquets non désirés.

9. Système (8) selon la revendication 4 ou n'importe quelle revendication dépendante de celle-ci, dans lequel ladite opération du premier processeur (22) sur un ou plusieurs des ensembles de données utiles déchiffrées comprend l'utilisation des données utiles pour indexer le paquet.

10. Système (8) selon la revendication 9, dans lequel le premier processeur (22) est programmé de façon à supprimer les données utiles déchiffrées du paquet indexé après l'indexation

11. Système (8) selon l'une quelconque des revendications précédentes, dans lequel :
ledit flux d'entrée est un flux de transport d'entrée comprenant des paquets sûrs d'une pluralité de flux multiplexés ;
le premier processeur (22) est programmé de façon à générer les données de sortie sous la forme de paquets de sortie destinés à être fournis à l'appareil de sortie de l'utilisateur, et à écrire les paquets de sortie dans la mémoire du système (12) via ledit bus de données (1 5) ; et
le système (8) comprend une circuiterie de génération de flux de transport (26) agencée de façon à récupérer les paquets de sortie de la mémoire du système (12) via ledit bus de données (15), à les agencer en un flux de transport de sortie comprenant des paquets sûrs d'une pluralité de flux multiplexés, et à fournir le flux de transport de sortie à l'appareil de l'utilisateur comme un flux de sortie.

12. Système (8) selon l'une quelconque des revendications précédentes, dans lequel chaque paquet comprend un en-tête et des données utiles, et le premier processeur (22) est programmé de façon évaluer une ou plusieurs en-têtes des paquets sûrs afin de déterminer une séquence d'opérations à effectuer avant de transférer ensuite les paquets sûrs au deuxième processeur (24) pour le traitement de sécurité.

13. Système (8) selon la revendication 5 ou n'importe quelle revendication dépendante de celle-ci, dans lequel
chaque paquet comprend un en-tête et des données utiles, et les en-têtes et les données utiles d'une pluralité desdits paquets sont toutes deux chiffrées ensemble en un bloc chiffré ;
la circuiterie d'entrée (20) est agencée de façon à recevoir et à écrire ledit bloc dans la mémoire du système (12) ; et
le deuxième processeur (24) est programmé de façon à récupérer ledit bloc et à effectuer un déchiffrage basé sur bloc afin d'extraire les paquets dudit bloc, puis à réécrire les paquets extraits dans la mémoire du système (12) avant ladite récupération par le premier processeur (22).

14. Système (8) selon l'un quelconque des revendications précédentes, dans lequel le deuxième processeur (24) est agencé de façon à renvoyer des informations d'état concernant les paquets ayant subi le traitement de sécurité au premier processeur (22) via la deuxième circuiterie de mise en file d'attente (29).

15. Système (8) selon l'une quelconque des revendications précédentes, dans lequel certaines plages d'adressage du deuxième processeur (24) sont bloquées contre toute accès externe.

16. Procédé de traitement de flux de paquets, ce procédé comprenant :
un premier processeur programmable (22) connecté à un deuxième processeur programmable (24) et à une mémoire de système (12) via un bus de données (15), recevant un flux d'entrée comprenant des paquets sûrs ; ce procédé étant **caractérisé par** :
l'utilisation d'une première circuiterie de mise en file d'attente des paquets (28) connectée entre le premier processeur (22) et le deuxième processeur (24), séparée dudit bus de données (15) et de la mémoire (12), pour mettre en file d'attente les paquets sûrs destinés à être transférés du premier processeur (22) au deuxième processeur (24) ;
au niveau du deuxième processeur (24), l'exécution d'un code pour exécuter le traitement de sécurité en appliquant un ou plusieurs algorithmes de sécurité aux paquets sûrs reçus via ladite première circuiterie de mise en file d'attente (28) afin de générer des paquets ayant subi un traitement de sécurité ;
l'utilisation d'une deuxième circuiterie de mise en file d'attente des paquets (29) connectée entre le premier processeur (22) et le deuxième processeur (24), séparée dudit bus de données (15) et de ladite mémoire (12), pour mise en file d'attente les paquets ayant subi un traitement de sécurité destinés à être transférés du deuxième processeur (24) au premier processeur (22) ; et
l'exécution d'un code sur le premier processeur (22) pour faire subir un traitement supplémentaire aux paquets ayant subi le traitement de sécurité reçus via la deuxième circuiterie de mise en file d'attente (29), autrement qu'en appliquant un algorithme de sécurité, afin de générer des données de sortie destinées à être fournies à un appareil de sortie d'un utilisateur.
